# EUROPÄISCHE PATENTSCHRIFT

(11) **EP 2 149 844 B1**
(45) Veröffentlichungstag und Bekanntmachung des Hinweises auf die Patenterteilung: **06.04.2016**
(21) Anmeldenummer: 08013834.0
(22) Anmeldetag: 01.08.2008
(51) Int. Cl.: G06F 17/24, G06F 17/30, G06F 17/22

(54) **Verfahren und Computerprogrammprodukt zum automatischen Einfügen von Daten aus einem Datenbanksystem in eine Datenstruktur**
Method and computer program for automatically entering data from a database system into a file structure
Procédé et produit de programme informatique d'introduction automatique de données d'un système de base de données dans une structure de données

(43) Veröffentlichungstag der Anmeldung: 03.02.2010
(73) Patentinhaber: Scopeland Technology GmbH, 13469 Berlin (DE)
(72) Erfinder: Kucharski Dirk, 16515 Oranienburg (DE); Meier Christian, 13089 Berlin (DE); Noack, Karsten, 16547 Birkenwerder (DE)
(74) Vertreter: Bittner, Thomas L.

(56) Entgegenhaltungen:
- US-A1- 2004 117 731
- US-A1- 2006 206 346
- ANONYM: "Word report builder 6.0" INTERNET SOFT CORPORATION, [Online] 12. Januar 2008 (2008-01-12), XP002512585 Gefunden im Internet: URL:http://web.archive.org/web/20080121030 411/http://www.internet-soft.com/wordrep.h tm> [gefunden am 2009-01-28]
- LUKASZ BOWNIK, WOJCIECH GÓRKA, ADAM PIASECKI: "Automatic Form Filling Based on Ontology-Controlled Dialogue With the User" PROCEEDINGS OF THE INTERNATIONAL MULTICONFERENCE ON COMPUTER SCIENCE AND INFORMATION TECHNOLOGY, [Online] 15. Oktober 2007 (2007-10-15), - 17. Oktober 2007 (2007-10-17) Seiten 389-398, XP002512586 Wis?a, Poland Gefunden im Internet: URL:http://www.proceedings2007.imcsit.org/ pliks/51.pdf> [gefunden am 2009-01-28]
- ERIKA EHRLI: 'Data-driven document generation with Word 2007 and the Office XML File Formats: Part 1', [Online] 11 August 2006, XP055043628 Gefunden im Internet: <URL:http://blogs.msdn.com/b/erikaehrli/arc hive/2006/08/11/word2007datadocumentgenerat ionpart1.aspx> [gefunden am 2012-11-08]
- ANONYMOUS: 'Access: Link a subform to a form in Access 2003/XP/2000/97', [Online] 15 Mai 2008, XP055148342 Gefunden im Internet: <URL:http://web.archive.org/web/20080517134 730/http://www.techonthenet.com/access/subf orms/link.php> [gefunden am 2014-10-22]
- ANONYMOUS: 'MS Access LAB 6 Topic: Working with Forms', [Online] 09 Juli 2007, XP055148343 Gefunden im Internet: <URL:http://web.archive.org/web/20070709004 749/http://www.ieor.berkeley.edu/~goldberg/ courses/msa-labs2/lab6.pdf> [gefunden am 2014-10-22]

## Beschreibung

Die Erfindung liegt auf dem Gebiet von Technologien zum Einfügen von Daten aus einem Datenbanksystem in eine Datenstruktur und ein Computerprogrammprodukt.

### Hintergrund der Erfindung

Derartige Technologien werden zum Beispiel beim automatischen Erzeugen von Software-Modulen im Rahmen von Software-Entwicklungsprojcten verwendet. Allgemein geht es hierbei darum, in einer Datenstruktur, bei der es sich beispielsweise um eine elektronisches Dokument handelt, Dateninhalte, beispielsweise Stammdaten, aus einem Datenbanksystem in Datenstrukturplätze hinzufügen, denen zu diesem Zweck mit Platzhalterelementen zugeordnet sind. Der bisher üblichen Technologie entsprechend erfolgt das Ausfüllen oder Befüllen der Datenstrukturptätze mittels eine individuell erstellten Softwareprogramms, welches für den jeweiligen Anwendungsfall geschaffen und konfiguriert ist. Mit Hilfe des individuellen Programms werden die Datenstrukturplätze mit Dateninhalten aus dem Datenbanksystem gehüllt, deren konkrete Ausprägung sich auf Grund von Datensichtelementen aus Datensichten ergeben, die ihrerseits den Platzhalterelementen für die auszufüllenden Datenstrukturclemente zugeordnet sind.

Das Dokument US 2004/117731 A1 beschreibt ein Verfahren zum automatischen Generieren von komplexen Reports.

Das Dokument XP002512585 (Internet Soft Corporation (2008-01-12)) betrifft einen Report Builder, der Microsoft Word Dokumente als Ausgabeformat benutzt.

Das Dokument XP002512586 (*Bownik ef al.*) beschreibt ein Verfahren zum interaktiven Ausfüllen von Formularen mittels regelbasierter, semantischer Verfahren.

Das Dokument XP55043628 (*E.Ehrli*) beschreibt ein Verfahren zum Einfügen von Daten aus einer XML-Datei in eine Microsoft Word Dokumentenvorlage mittels XML-Mapping.

Das Dokument US 2006/0206346 A1 offenbart ein Verfahren zum Erzeugen einer Benutzeroberfläche zum Darstellen eines von Business-Prozessen. Ein Entwickler erzeugt eine Maske, in welche sowohl Prozessdaten, als auch prozessrelevante Daten eingebettet sein können. Die Maske wird kompiliert, um hieraus verschiedene Java-Anwendungen zu erzeugen. Beim Ausführen der Java-Anwendungen werden die Prozessdaten und die prozessrelevanten Daten angezeigt.

### Zusammenfassung der Erfindung

Aufgabe der Erfindung ist es, verbesserte Technologien zum automatischen Einfügen von Daten aus einem Datenbanksystem in eine Datenstruktur anzugeben, bei denen unabhängig von der konkreten Ausbildung der Datenstruktur und der ihr zugeordneten Platzhalterelemente eine effiziente und korrekte Befüllung mit den Daten aus dem Datenbanksystem sichergestellt ist, ohne dass eine anwendungsabhängige Anpassung und eine hiermit verbundene individuelle Programmmodulerstellung notwendig ist.

Diese Aufgabe wird erfindungsgemäß gelöst durch ein Verfahren zum Einfügen von Daten aus einem Datenbanksystem in eine Datenstruktur nach dem unabhängigen Anspruch 1. Die Erfindung umfasst weiterhin ein Computerprogrammprodukt nach dem unabhängigen Anspruch 8. Vorteilhafte Ausgestaltungen der Erfindung sind Gegenstand von abhängigen Unteransprüchen.

Die Erfindung umfasst den Gedanken eines Verfahrens zum Einfügens von Daten aus einem Datenbanksystem in eine Datenstruktur, wobei das Verfahren in einer Datenverarbeitungscinrichtung die folgenden Schritte umfasst:
- Bereitstellen einer Datenstruktur, bei der auszufüllenden Datenstrukturplätzen Platzhalterelemente zugeordnet sind, die untereinander gemäß einer Ordnungshierarchie in Beziehung stehen und denen jeweils ein Datensichtelement in einer Datensichtstruktur zugeordnet ist,
- Bereitstellen der Datensichtstruktur, in welcher mehrere Datensiehten, welche die den Platzhalterelementen zugeordneten Datensiehtelemente umfassen, in einer die Ordnungshierarchie nachbildenden Master-Detail-Beziebung gebildet sind, und
- Übergeben der Datensichtstruktur an ein Einfügemodul, welches konfiguriert ist, nach dem Empfangen der Datensichtstruktur pro-akäv und automatisch die auszufüllenden Datenstrukturplätze den Platzhalterelementen entsprechend auszufüllen, indem von dem Einfügemodul die folgenden Schritte ausgeführt werden:
   al. Einfügen eines jeweils zugeordneten Datenbankinhalts für ein oder mehrere Datensichtelemente aus einer Datensicht, die eine höchste Hierarchieebene der Datensichtstruktur bildet, in die auszufüllenden Datenstruktur, wobei der jeweils zugeordnete Datenbankinhalt für das eine oder die mehreren Datensichtelemente zeilenweise in die auszufüllenden Datenstrukturplätze mit den zugeordneten Platzhalterelementen eingefügt wird,
   a2. Prüfen, ob die Datensichtstruktur für die Datensicht wenigstens eine abhängige Datensicht aufweist, wobei die Datensicht und die wenigstens eine abhängige DatenSicht in einer Master-Detail-Beziehung stehen, und
   a3. Ausführen der Schritte a1., a2. und a3. für die wenigstens eine abhängige Datcnsicht für jede Zeile der Datcnsicht, wenn beim Prüfen im Schritt a2. festgestellt wird, dass die Datensichtstruktur für die Datensicht weinigstens eine abhängige Datensicht aufweist.

Mit dem in der Datenverarbeitungseinrichtung vorgesehenen Einfügemodul, welches mittels hardware- und /oder softwareseitig gebildeter Komponenten implementiert werden kann, ist eine anwendungsunabhängige Möglichkeit geschaffen, die Datenstruktur mit den ihr zugeordneten Platzhalterelementen der Hierarchie dieser entsprechend effizient und vollständig mit den zugehörigen Dateninhalten aus dem Datenbanksystem automatisch zu befüllen. Die Konfiguration des Einfügemoduls stellt sicher, dass unabhängig davon, welche Art von Datensichtstruktur an das Einfügemodul übergeben wird, die von der Datenstruktur umfassten Datensichtelemente korrekt und der den Platzhalterelementen der Datenstruktur zugeordneten Hierarchie entsprechend in die Datenstruktur eingefügt werden. Der Prozess des Einfügens oder Befüllens von Dateninhalten aus -dem Datenbanksystem in die Datenstruktur mit den auszufällenden Datenstrukturplätzen wird so weitgehend automatisiert und anwendungsunabhängig gemacht. Individueller Programmieraufwand, wie er bei den nach dem Stand der Technik bekannten Vorgehensweisen erforderlich ist, wird eingespart

Eine bevorzugte Weiterbildung der Erfindung sieht vor, dass die Datensichtstruktur als eine Master-Detail-Beziehung über mehr als zwei Hierarchieebenen bereitgestellt wird, in welcher wenigstens eine Detaildatensicht aus einem Master-Detail-Verhältnis ihrerseits eine Masterdatensicht in einem weiteren Master-Detail-Verhältnis bildet. Auf diese Weise können beliebig komplizierte und vielfältig strukturierte Master-Detail-Beziehungen in der Datensichtstruktur zwischen den Datensichten realisiert werden, so dass insbesondere von einer Detaildatensicht selbst wieder eine Detaildatensicht abhängig sein kann, so dass sich auch hier ein zugehöriges Master-Detail-Verhältnis ergibt Das rekursiv ausgeführte Verfahren zum Einfügen der Datenbankinhalte stellt ein vollständiges und korrektes Befüllen der Datenstruktur auch bei kompliziertesten Datensichtstrukturen sicher.

Bei einer zweckmäßigen Ausgestaltung der Erfindung kann vorgesehen sein, dass die Datensichtstruktur und die den auszufüllenden Datenstrukturplätzen zugeordneten Platzhalterelemente bereitgestellt werden, indem von der Datenverarbeitungseinrichtung die mehreren Datensichten und die Datensichtelemente sowie die Master-Detail-Beziehung festlegende Benutzereingabe mittels einer Eingabeeinrichtung erfasst werden. Bei der Eingabeeinrichtung kann es sich beispielsweise um eine Tastatur oder eine beliebige Zeigeeinrichtung handeln, beispielsweise eine Maus oder einen Touchsereen, welcher an die Datenverarbeitungseinrichtung angeschlossen ist und insoweit das automatische Erfassen von Benutzereingaben ermöglicht. Es kann ein interaktiver Eingabeprozess implementiert sein, um die Benutzereingaben zu erfassen. Eine vorteilhafte Ausführungsform sieht vor, dass die Benutzereingabe als Drag-und-Drop Benutzereingaben erfasst werden. Die Technologie von Drag-und-Drop Benutzereingaben ist als solche in verschiedenen Ausführungsformen bekannt und ermöglicht es dem Benutzer, auf einfache Art und Weise bildschirmorientiert Soliwareelemente mit zu bearbeiten. Beim Erstellen der Datensichtstruktur kann der Benutzer hier mit geringem Aufwand die Master-Detail-Beziehungen in der Datensichtstruktur auch über eine Vielzahl von Hierarchieebenen definieren.

Eine Fortbildung der Erfindung kann vorsehen, dass die Datensichtstruktur zusammen mit einer die Platzhalterelemente enthaltenden Strukturbeschrcibungsdatei bereitgestellt wird. Für die Strukturbeschreibungsdatei, welche insbesondere Art der und Beziehungen zwischen den Platzhalterelementen beschreibt, können sogenannte Schemasprachen genutzt werden, zum Beispiel DTD, XML-Schema, DSD (*"Document Structure Degcription"*)*,* RELAX NG, Schematron, Examplatron oder dergleichen. Die Platzhalterelemente werden bei dieser Ausführungsform außerhalb der zu befüllenden Datenstruktur vorgehalten.

Alternativ ist bei einer Weiterbildung der Erfindung vorgesehen, dass die Datensichtstruktur die Platzhalterelemente enthaltend bereitgestellt wird. Die Platzhalterelemente werden bei dieser Ausgestaltung innerhalb der zu befüllenden Datenstruktur vorgehalten. Dies kann beispielsweise mittels einer Template-Datenstruktur erfolgen.

Bevorzugt sieht eine Fortbildung der Erfindung vor, dass das Einfügen des den Datensichtelementen jeweils zugeordneten Datenbankinhalts für die Datensichtelemente der von der Detaildatensicht abhängigen Detaildatensicht begonnen wird, bevor das Einfügen des den Datensichtelementen jeweils zugeordneten Datenbankinhalts für die Datensichtelemente der Masterdatensicht des jeweiligen Master-Detail-Verhältnis abgeschlossen ist. Grundsätzlich kann das Einfügen der Datenbankinhalte für die Masterdatensicht und die Detaildatensicht in beliebiger Einzelschritte unterteilt und in beliebiger Reihenfolge ausgeführt werden. Alternativ oder ergänzend kann es so beis-pielsweise vorgesehen sein, das Einfügen der Dateninhalte für die Detaildatensicht vor dem Einfügen der Dateninhalte für die Masterdatensicht zu beginnen.

Bei einer vorteilhaften Ausgestaltung der Erfindung kann vorgesehen sein, dass die Datensichtstruktur einem Datenformat ausgewählt aus der folgenden Gruppe von Datenformaten bereitgestellt wird: XML-Format, HTML und Text-Format. Text-Formate können bevorzugt Dokumente aus MSVWORD, mit einem proprietären Format von Graphik- oder Tabellenkalkulationsanwendungen, in Form von Desktop-Publishing-Daleien oder im Nur-Text-Format sein.

### Beschreibung bevorzugte Ausführungsbeispiele der Erfindung

Die Erfindung wird im Folgenden anhand von bevorzugten Ausführungsbeispiclen unter Bezugnahme auf Figuren einer Zeichnung näher erläutert. Hierbei zeigen:
- Fig. 1: eine schematische Darstellung einer Datenverarbeitungseinrichtung zum Ausführen eines Verfahrens zum automatischen Einfügen von Daten aus einem Datenbanksystem in eine Datenstruktur,
- Fig. 2: eine schematische Darstellung einer Datensichtstruktur mit mehreren Datensichten, für die Mastcr-Detail-Verhältnisse gebildet sind,
- Fig. 3: eine schematische Darstellung für Datenbankinhalte (linke Seite) sowie eine auszufüllende Datenstruktur mit Platzhalterelementen,
- Fig. 4: ein Ablaufdiagramm zum Erläutern eines automatischen Einfügens von Datenbankinhalten in einer Datenstruktur,
- Fig. 5: eine schematische Darstellung einer auszufüllenden Datenstruktur mit Platzhalterelementen und
- Fig. 6: eine schematische Darstellung von Datenbankinhalten mit Datensichtelementen in mehreren Hierarchieebnen.

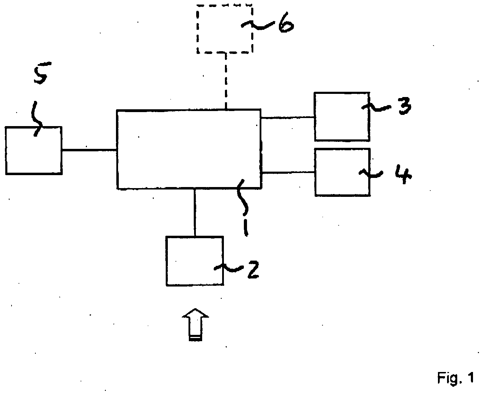

Fig. 1 zeigt eine schematische Darstellung einer Datenverarbeitungseinrichtung zum Ausführen eines Verfahrens zum automatischen Einfügen von Daten aus einem Datenbanksystem in eine Datenstruktur. An eine zentrale Steuereinrichtung 1, welche ihrerseits eine programmierbare Prozessoreinrichtung umfasst, sind eine Eingabeeinrichtung 2, einer Speichereinrichtung 3 sowie eine Ausgabeeinrichtung 4 gekoppelt, so dass zwischen den gekoppelten Komponenten ein Datenaustausch ermöglicht ist. Darüber hinaus steht die zentrale Steuereinrichtung 1 mit einer Datenbank 5 in Verbindung. Weitere Peripherieeinrichtungen 6, die wahlweise vorgesehen sein können, sind angedeutet. Insbesondere ist eine Einbindung in ein Netzwerk möglich.

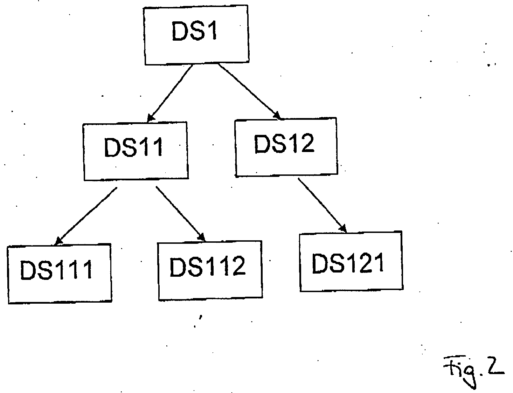

Fig. 2 zeigt eine schematische Darstellung einer Datensichtstruktur mit mehreren Datcnsichten, für die Master-Detail-Verhältnisse gebildet sind. In einer obersten Hierarchieebene befindet sich die Datcnsicht DS1. Die Datensicht DS1 steht in einer Master-Detail-Beziehung zu den von ihr abhängigen Datensichten DS11 und DS12. Die Datensichten DS11 und US12 bilden ihrerseits wieder Master-Datensichten von ihnen abhängige Datensichten, nämlich die Datensichten DS111, DS112, DS121.

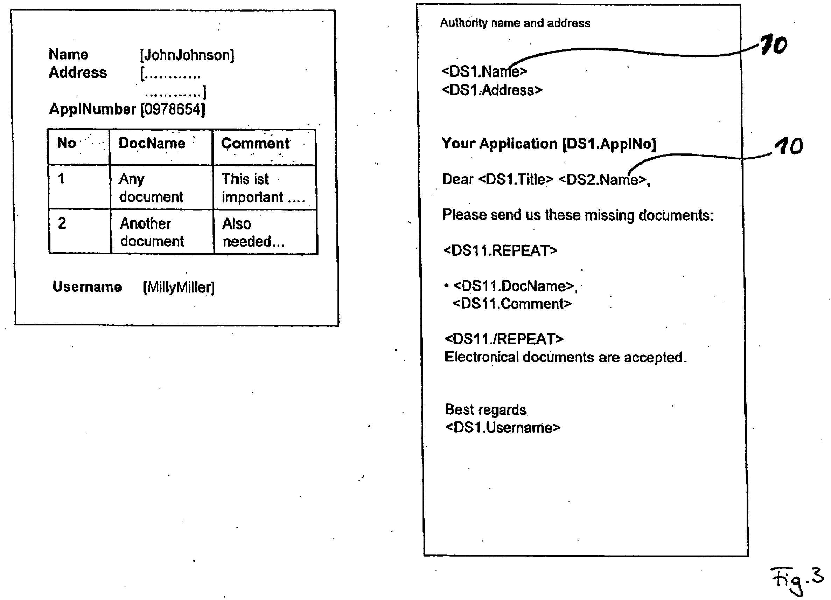

Fig. 3 zeigt eine schematische Darstellung für Datenbankinhalte (linke Seite) sowie eine auszufüllende Datenstruktur mit Platzhalterelementen (rechte Seite). In dem gezeigten Ausführungsbeispiel ist die Datenstruktur als ein so genannter Template-Datensatz ausgeführt, bei dem es sich um ein Textdokument handelt, welches mit den Platzhalterelementen 10 zugewiesenen Datenbankinhalten aus einem Datenbanksystem aufzufüllen ist. Der auf der linken Seite in Fig. 3 dargestellte Datenbankinhalt zeigt schematisch eine 7eile einer Datensicht, die mehrere Datenfelder umfasst, nämlich die Datenfelder Name, Adresse usw.

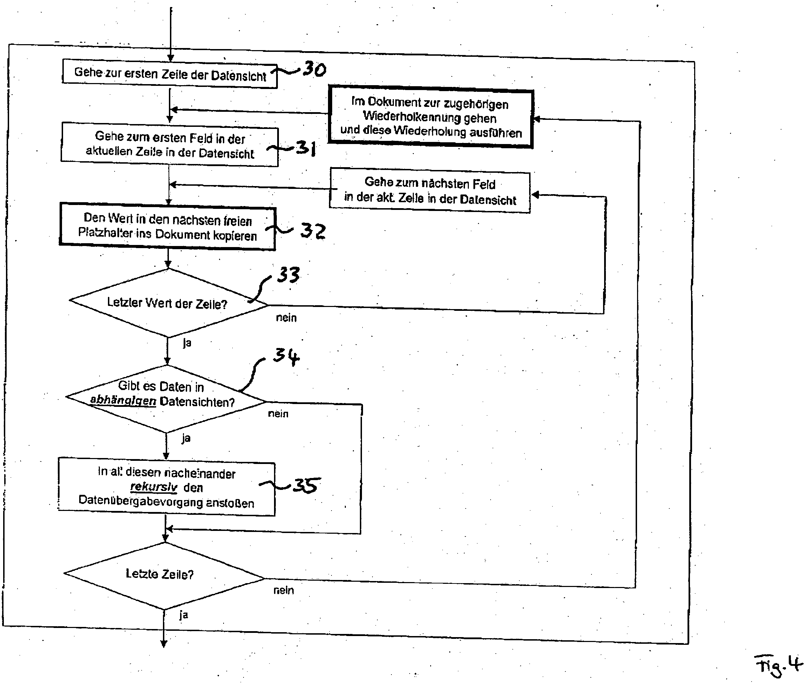

Fig. 4 zeigt ein Ablaufdiagramm zum Erläutern eines automatischen Einfügens von Datenbankinhalten in einer Datenstruktur. Schematisch ist gezeigt die Arbeitsweise eines Einigemoduls, welches bei der Anordnung in Fig. 1 in der zentralen Steuereinrichtung 1 implementiert ist, nach dem Empfang einer Datensichtstruktur, die beispielsweise gemäß Fig. 2 MasterDetail-Verhältnisse umfasst, um die aufzufüllende Datenstruktur zu befüllen, beispielsweise dem Template-Datensatz in Fig. 3 (rechte Seite).

Bei dem Verfahren beginnt das Einfügemodul in einem Schritt 30 in einer ersten Zeile einer aktuell abzuarbeitenden Datensicht aus der Datensichtstruktur. In Fig. 3 ist in diesem Zusammenhang die erste Zeile der Datensicht DS1 dargestellt. In einem Schritt 31 wird zunächst ein erstes Feld der aktuell zu verarbeitenden Zeile in der Datensicht in die auszufüllende Datenstruktur eingefügt. Bei dem in Fig. 3 dargestellten Ausführungsbeispiel bedeutet dies, dass der Dateninhalt des Datenfeldes "Name" in den Template-Datensatz an der Stelle des Platzhalter-elementes <DS1.Name> eingefügt wird. Dieses erfolgt in einem Schritt 32.

In einem Schritt 33 wird überprüft, ob die aktuell zu verarbeitende Zeile der Datensicht weitere Datenfelder aufweist. Wenn ja, wird das nächste Datenfeld abgearbeitet, was in dem Ausführungsbeispiel in Fig. 3 das Datenfeld "Adresse" ist. Dieses wird an der Stelle des Platzhalterelemente <DS1.Adresse> eingefügt. Hierdurch wird die aktuelle Zeile in der Datensicht, abgearbeitet. In Schritt 34 wird geprüft, ob es zur aktuell behandelten Datensicht abhängige Datensichten gibt. Beispielsweise ist in Fig. 2 die Datcnsicht DS11 von der Datcnsicht DS 1 abhängig. Wiederum ist die Datensicht DS112 von der Datensicht DS11 abhängig. Falls abhängige Datensichten in der von dem Einfügemodul bearbeiteten Datensichtstruktur für die aktuell behandelte Datensicht existieren, werden diese dann rekursiv in gleicher Weise behandelt wie die aktuelle Datensicht Dieses ist in Fig. 4 durch einen Schritt 35 dokumentiert.

Anschließend wird derselbe Vorgang für die nächste Zeile der aktuellen Datensicht, zum Beispiel für eine weitere Person, wiederholt. Der hierfür durchgeführte Zeilen wechsel in der aktuellen Datensicht hat wegen des Master-Detail-Beziehung beider Datensichten zur Folge, dass die Daten der abhängigen Datensicht nach dem Zeilenwechsel unter den deshalb veränderten Selektionsbedingungen erneut aus der Datenbank ausgelesen werden, so dass diese nun andere, zu dem nun aktuellen Datensatz in korrekter inhaltlicher Beziehung stehende Daten enthalten. Somit erhält man also für jeden Datensatz der aktuellen Datensicht einen eigenständigen Satz an Detaildaten. Das Befüllen der Datenstruktur, ist abgeschlossen, wenn die letzte Zeile der aktuellen Datensicht abgehandelt wurde.

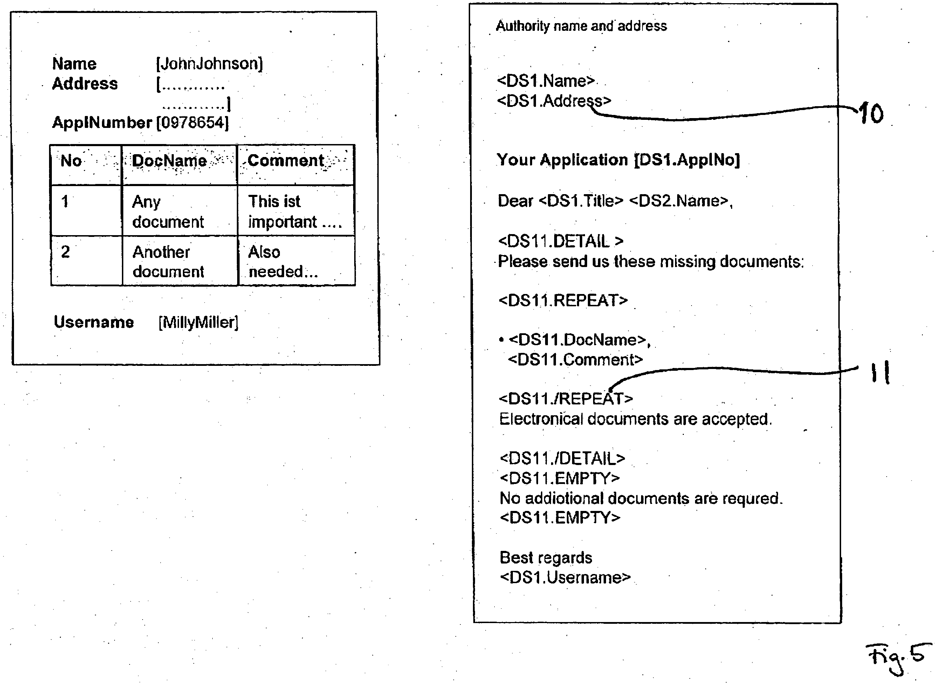

Fig. 5 zeigt eine schematische Darstellung einer auszufüllenden Datenstruktur mit Platzhalterelementen 10, einschließlich Wiederholungselementen 11. Es ist gezeigt, wie das zuvor erläuterte Verfahren mittels weiterer Ausgestaltungen schrittweise weiter verbessert werden kann, um den zum Teil sehr anspruchsvollen Anforderungen der Praxis standzuhalten. So werden hier zusätzliche Elemente und Mechanismen ergänzt, die dazu dienen, auch den Anwendungen gut zu unterstützen, bei denen es vorkommen kann, dass die Datensicht DS11 keinen einzigen Datensatz enthält. Wenn dieser Fall eintritt, dass die Datensicht keinen einzigen Datensatz enthält, muss bei manchen Dokumenten so wie in diesem Beispiel nicht nur die pro Datensatz zu wiederholende Sequenz entfernt werden, sondern zusätzlich auch noch ein einführender und/oder abschließender Textabschnitt. Die Platzhalterelemente <DS11.Detail> und <DS11./Detail> bezeichnen zu diesem Zweck den gesamten in diesem Fall vom Einfügemodul zu entfernenden Textabschnitt. Da in einigen Fällen erwartet wird, dass dann anstelle des Entfernten ein alternativer Textabschnitt eingefügt wird (welcher in diesem Bespiel besagt, dass keine weiteren Dokumente erforderlich sind), ist auch hierfür ein gesondert gekennzeichneter Bereich zwischen <DS11.Empty> und <DS11./Empty> vorgesehen. Falls die Datensicht doch mindestens einen Datensatz enthält, dann entfernt das Einfügemodul diesen Bereich eigenständig.

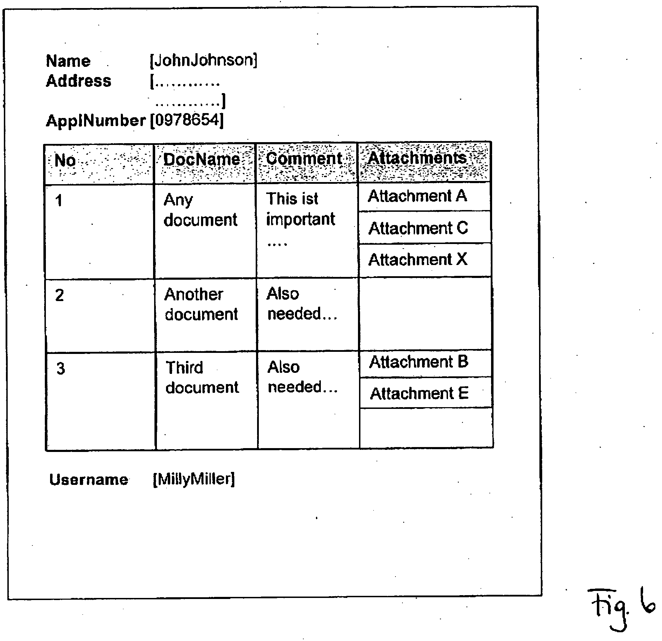

Fig. 6 zeigt eine schematische Garstellung von Datenbankinhalten mit Datensichtelementen in mehreren Hierarchieebnen. Im Unterschied zu der schematischen Darstellung des Dateninhaltes in Fig. 3 verfügt der in Fig. 6 gezeigte Dateninhalt über eine weitere Hierarchieebene. Die Tabelle enthält eine von der die Tabelle bildenden abhängige Datensicht in Form einer weiteren Tabelle. Die Tabelle ihrerseits bildet in diesem Fall also die Masterdatcnsicht in den zugehörigen Master-Detail-Verhältnis.

Die in der vorstehenden Beschreibung, den Ansprüche und der Figur offenbarten Merkmale der Erfindung können sowohl einzeln als auch in beliebiger Kombination für die Verwirklichung der Erfindung in ihren Ausführungsformen von Bedeutung sein.

## Patentansprüche

1. Verfahren zum Einfügen von Daten aus einem Datenbanksystem in eine Datenstruktur, wobei das Verfahren in einer Datenverarbeitungseinrichtung die folgenden Schritte umfasst:
- Bereitstellen einer Datenstruktur, bei der auszufüllenden Datenstrukturplätzen Platzhalterelemente (10) zugeordnet sind, die untereinander gemäß einer Ordnungshierarchie in Beziehung stehen und denen jeweils ein Datensichtelement in einer Datensichtstruktur zugeordnet ist,
- Bereitstellen der Datensichtstruktur, in welcher mehrere Datensichten, welche die den Platzhalterelementen (10) zugeordneten Datensichtelemente umfassen, in einer die Ordnungshierarchie nachbildenden Master-Detail-Beziehung gebildet sind, und
- Übergeben der Datensichtstruktur an ein Einfügemodul, welches konfiguriert ist, nach dem Empfangen der Datensichtstruktur pro-aktiv und automatisch die auszufüllenden Datenstrukturplätze den Platzhalterelementen (10) entsprechend aufzufüllen, indem von dem Einfügemodul die folgenden Schritte ausgeführt werden:
a1. Einfügen (32) eines jeweils zugeordneten Datenbankinhalts für ein oder mehrere Datensichtelemente aus einer Datensicht, die eine höchste Hierarchieebene der Datensichtstruktur bildet, in die auszufüllenden Datenstruktur, wobei der jeweils zugeordnete Datenbankinhalt für das eine oder die mehreren Datensichtelemente zeilenweise in die auszufüllenden Datenstrukturplätze mit den zugeordneten Platzhalterelementen (10) eingefügt wird,
a2. Prüfen (34), ob die Datensichtstruktur für die Datensicht wenigstens eine abhängige Datensicht aufweist, wobei die Datensicht und die wenigstens eine abhängige Datensicht in einer Master-Detail-Beziehung stehen, und
a3. Ausführen der Schritte a1., a2. und a3. (35) für die wenigstens eine abhängige Datensicht für jede Zeile der Datensicht, wenn beim Prüfen im Schritt a2. festgestellt wird, dass die Datensichtstruktur für die Datensicht wenigstens eine abhängige Datensicht aufweist.

2. Verfahren nach Anspruch 1, **dadurch gekennzeichnet, dass** die Datensichtstruktur als eine Master-Detail-Beziehung über mehr als zwei Hierarchieebenen bereitgestellt wird, in welcher die wenigstens eine abhängige Datensicht ihrerseits eine Masterdatensicht in einem weiteren Master-Detail-Verhältnis bildet.

3. Verfahren nach Anspruch 1 oder 2, **dadurch gekennzeichnet, dass** die Datensichtstruktur und die den auszufüllenden Datenstrukturplätzen zugeordneten Platzhalterelemente (10) bereitgestellt werden, indem von der Datenverarbeitungseinrichtung die mehreren Datensichten und die Datensichtelemente sowie die Master-Detail-Beziehung festlegende Benutzereingabe mittels einer Eingabeeinrichtung erfasst werden.

4. Verfahren nach mindestens einem der vorangehenden Ansprüche, **dadurch gekennzeichnet, dass** die Datensichtstruktur zusammen mit einer die Platzhalterelemente (10) enthaltenden Strukturbeschreibungsdatei bereitgestellt wird.

5. Verfahren nach mindestens einem der Ansprüche 1 bis 3, **dadurch gekennzeichnet, dass** die Datensichtstruktur die Platzhalterelemente (10) enthaltend bereitgestellt wird.

6. Verfahren nach mindestens einem der vorangehenden Ansprüche, **dadurch gekennzeichnet, dass** die Datensichtstruktur einem Datenformat ausgewählt aus der folgenden Gruppe von Datenformaten bereitgestellt wird: XML-Format, HTML und Text-Format.

7. Verfahren nach mindestens einem der vorangehenden Ansprüche, dadurch **gekenn-zeichnet**, dass die Datenstruktur in den auszufüllenden Datenstrukturplätzen Wiederholungselemente für eine Teil der Platzhalterelemente (10) aufweisend bereitgestellt wird.

8. Computerprogramm-Produkt zum Einfügen von Daten aus einem Datenbanksystem in eine Datenstruktur, wobei das Produkt die folgenden Mittel umfasst:
- auf einem elektronischen Speichermedium aufgezeichnete Mittel zum Bereitstellen einer Datenstruktur, bei der auszufüllenden Datenstrukturplätzen Platzhalterelemente (10) zugeordnet sind, die untereinander gemäß einer Ordnungshierarchie in Beziehung stehen und denen jeweils ein Datensichtelement in einer Datensichtstruktur zugeordnet ist,
- auf einem elektronischen Speichermedium aufgezeichnete Mittel zum Bereitstellen der Datensichtstruktur, in welcher mehrere Datensichten, welche die den Platzhalterelementen (10) zugeordneten Datensichtelemente umfassen, in einer die Ordnungshierarchie nachbildenden Master-Detail-Beziehung gebildet sind, und
- auf dem elektronischen Speichermedium aufgezeichnete Mittel zum Übergeben der Datensichtstruktur an ein Einfügemodul, welches konfiguriert ist, nach dem Empfangen der Datensichtstruktur pro-aktiv und automatisch die auszufüllenden Datenstrukturplätze den Platzhalterelementen (10) entsprechend aufzufüllen, indem von dem Einfügemodul die folgenden Schritte ausgeführt werden:
a1. Einfügen (32) eines jeweils zugeordneten Datenbankinhalts für ein oder mehrere Datensichtelemente aus einer Datensicht, die eine höchste Hierarchieebene der Datensichtstruktur bildet, in die auszufüllende Datenstruktur, wobei der jeweils zugeordnete Datenbankinhalt für das eine oder die mehreren Datensichtelemente zeilenweise in die auszufüllenden Datenstrukturplätze mit den zugeordneten Platzhalterelementen (10) eingefügt wird,
a2. Prüfen (34), ob die Datensichtstruktur für die Datensicht wenigstens eine abhängige Datensicht aufweist, wobei die Datensicht und die wenigstens eine abhängige Datensicht in einer Master-Detail-Beziehung stehen, und
a3. Ausführen der Schritte a1., a2. und a3. (35) für die wenigstens eine abhängige Datensicht für jede Zeile der Datensicht, wenn beim Prüfen im Schritt a2. festgestellt wird, dass die Datensichtstruktur für die Datensicht wenigstens eine abhängige Datensicht aufweist.

## Claims

1. A method for automatically inserting data from a database system into a data structure, wherein the method comprises the following steps in a data processing system:
- providing of a data structure in which data structure places to be filled are assigned placeholder elements (10) that are related to each other in accordance with a hierarchical structure and to each of which one data view element is assigned in a data structure view,
- providing of the data view structure, in which a plurality of data views comprising the data view elements assigned to the placeholder elements (10) are formed in a master-detail relationship that emulates the hierarchical structure, and
- transferring the data view structure to an insertion module which is configured, after receiving the data view structure, to pro-actively and automatically fill the data structure places to be filled corresponding to the placeholder elements (10), by the insertion module carrying out the following steps:
a1. inserting (32) an assigned database content for one or more data view elements from a data view, which forms a highest hierarchical level of the data view structure, into the data structure to be filled, wherein each assigned database content for the one or more data view elements is inserted line by line with the assigned placeholder elements (10) into the data structure places to be filled,
a2. checking (34) whether the data view structure for the data view has at least one dependent data view, wherein the data view and the at least one dependent data view are in a master-detail relationship, and
a3. executing the steps a1., a2. and a3. (35) for the at least one dependent data view for each line of the data view, if it is determined during the check in step a2. that the data structure view for the data view has at least one dependent data view.

2. The method according to Claim 1, **characterized in that** the data structure view is provided as a master-detail relationship over more than two levels of the hierarchy in which the at least one dependent data view in turn forms a master data view in a further master-detail relationship.

3. The method according to Claim 1 or 2, **characterized in that** the data structure view and the placeholder elements (10) assigned to the data structure places to be filled are provided by the data processing system acquiring the plurality of data views and the data view elements and the user input determining the master-detail relationship, by means of an input device.

4. The method according to at least one of the preceding claims, **characterized in that** the data structure view is provided together with a structure description file containing the placeholder elements (10).

5. The method according to at least one of Claims 1 to 3, **characterized in that** the data structure view is provided such that it contains the placeholder elements (10).

6. The method according to at least one of the previous claims, **characterized in that** the data structure view is implemented in a data format selected from the following group of data formats: XML format, HTML and text format.

7. The method according to at least one of the preceding claims, **characterized in that** the data structure in the data structure places to be filled is provided such that it has repeat elements for part of the placeholder elements (10).

8. A computer program product for automatically inserting data from a database system into a data structure, wherein the product comprises the following means:
- means which are recorded on an electronic storage medium for providing a data structure, in which data structure places to be filled are assigned placeholder elements (10) that are related to each other in accordance with a hierarchical structure and to each of which one data view element is assigned in a data structure view,
- means which are recorded on an electronic storage medium for providing the data structure view in which a plurality of data views comprising the data view elements assigned to the placeholder elements (10) are formed in a master-detail relationship that emulates the hierarchical structure, and
- means which are recorded on the electronic storage medium for transferring the data view structure to an insertion module which is configured after receiving the data view structure, to pro-actively and automatically fill the data structure places to be filled corresponding to the placeholder elements (10), by the insertion module carrying out the following steps:
a1. inserting (32) an assigned database content for one or more data view elements from a data view, which forms a highest hierarchical level of the data view structure, into the data structure to be filled, wherein each assigned database content for the one or more data view elements is inserted line by line with the assigned placeholder elements (10) into the data structure places to be filled,
a2. checking (34) whether the data view structure for the data view has at least one dependent data view, wherein the data view and the at least one dependent data view are in a master-detail relationship, and
a3. executing the steps a1., a2. and a3. (35) for the at least one dependent data view for each line of the data view, if it is determined during the check in step a2. that the data structure view for the data view has at least one dependent data view.

## Revendications

1. Procédé pour l'insertion de données provenant d'un système de base de données dans une structure de données, dans lequel le procédé comprend les étapes suivantes dans un dispositif de traitement de données :
- 1a mise à disposition d'une structure de données où des places de structure de données sont affectées à des éléments détenteurs de places (10) qui sont en rapport les uns avec les autres conformément à une hiérarchie d'ordre et auxquels on affecte respectivement un élément de vue de données dans une structure de vues de données,
- la mise à disposition de la structure de vues de données dans laquelle plusieurs vues de données, lesquelles comprennent les éléments de vues de données affectés aux éléments détenteurs de places (10), sont formées selon une relation maître-détail reproduisant la hiérarchie d'ordre, et
- la transmission de la structure de vues de données à un module d'insertion qui est configuré, après la réception de la structure de vues de données, pour remplir pro-activement et automatiquement les places de structure de données à remplir conformément aux éléments détenteurs de places (10) en ce que le module d'insertion réalise les étapes suivantes :
a1. l'insertion (32) d'un contenu de base de données ayant été respectivement affecté pour un ou plusieurs élément(s) de vue(s) de données d'une vue de données, laquelle forme un niveau hiérarchique le plus élevé de la structure de vues de données, dans la structure de données à remplir, dans lequel le contenu de base de données respectivement affecté pour ce ou ces élément(s) de vue(s) de données est inséré ligne par ligne dans les places de structure de données à remplir avec les éléments détenteurs de places (10) affectés,
a.2 la vérification (34) pour savoir si la structure de vues de données pour la vue de données présente au moins une vue de données dépendante, dans lequel la vue de données et cette au moins une vue de données dépendante se trouvent dans une relation maître-détail, et
a. 31'exécution des étapes a.1, a.2 et a.3 (35) pour cette au moins une vue de données dépendante pour chaque ligne de la vue de données lorsque l'on constate, lors de la vérification à l'étape a2., que la structure de vues de données présente, pour la vue de données, au moins une vue de données dépendante.

2. Procédé selon la revendication 1, **caractérisé en ce que** la structure de vues de données est mise à disposition en tant qu'une relation maître-détail sur plus de deux niveaux hiérarchiques où l'au moins une vue de données dépendante forme quant à elle une vue de données maître selon une autre relation maître-détail.

3. Procédé selon la revendication 1 ou 2, **caractérisé en ce que** la structure de vues de données et les éléments détenteurs de places (10) affectés aux places de structure de données à remplir sont mis à disposition **en ce que** le dispositif de traitement de données détecte les plusieurs vues de données et les éléments de vues de données ainsi que la saisie utilisateur définissant la relation maître-détail au moyen d'un dispositif de saisie.

4. Procédé selon l'une au moins des revendications précédentes, **caractérisé en ce que** la structure de vues de données est mise à disposition ensemble avec un fichier de description de structure contenant les éléments détenteurs de places (10).

5. Procédé selon l'une au moins des revendications 1 à 3, **caractérisé en ce que** la structure de vues de données contenant les éléments détenteurs de places (10) est mise à disposition.

6. Procédé selon l'une au moins des revendications précédentes, **caractérisé en ce que** la structure de vues de données est mise à disposition dans un format de données sélectionné dans le groupe suivant de formats de données : le format XML, le format HTML et le format texte.

7. Procédé selon l'une au moins des revendications précédentes, **caractérisé en ce que** la structure de données, présentant dans les places de structure de données à remplir des éléments de répétition pour une partie des éléments détenteurs de places (10), est mise à disposition.

8. Produit de programme informatique pour l'insertion de données provenant d'un système de base de données dans une structure de données, dans lequel le produit comprend les moyens suivants :
- des moyens enregistrés sur un support de stockage électronique pour la mise à disposition d'une structure de données où des places de structure de données à remplir sont affectées à des éléments détenteurs de places (10) qui sont en relation les uns avec les autres conformément à une hiérarchie d'ordre et auxquels on associe respectivement un élément de vue de données dans une structure de vues de données,
- des moyens enregistrés sur le support de stockage électronique pour la mise à disposition de la structure de vues de données où plusieurs vues de données, lesquelles comprennent les éléments de vues de données affectés aux éléments détenteurs de places (10), sont formées selon une relation maître-détail reproduisant la hiérarchie d'ordre, et
- des moyens enregistrés sur le support de stockage électronique pour la transmission de la structure de vues de données à un module d'insertion qui est configuré, après la réception de la structure de vues de données, pour remplir pro-activement et automatiquement les places de structure de données à remplir conformément aux éléments détenteurs de places (10) en ce que les étapes suivantes sont réalisées par le module d'insertion :
a1. l'insertion (32) d'un contenu de base de données ayant été respectivement affecté pour un ou plusieurs élément(s) de vue(s) de données d'une vue de données, laquelle forme un niveau hiérarchique le plus élevé de la structure de vues de données, dans la structure de données à remplir, dans lequel le contenu de base de données respectivement affecté pour ce ou ces élément(s) de vue(s) de données est inséré ligne par ligne dans les places de structure de données à remplir avec les éléments détenteurs de places (10) affectés,
a2. la vérification (34) pour savoir si la structure de vues de données pour la vue de données présente au moins une vue de données dépendante, dans lequel la vue de données et cette au moins une vue de données dépendante se trouvent dans une relation maître-détail, et
a.3 l'exécution des étapes a.1, a.2 et a.3 (35) pour cette au moins une vue de données dépendante pour chaque ligne de la vue de données lorsque l'on constate, lors de la vérification à l'étape a2., que la structure de vues de données présente, pour la vue de données, au moins une vue de données dépendante.
